# EUROPEAN PATENT SPECIFICATION

(11) **EP 2 233 199 B1**
(45) Date of publication and mention of the grant of the patent: **24.06.2015**
(21) Application number: 09156433.6
(22) Date of filing: 27.03.2009
(51) Int. Cl.: B01D 65/08, B01D 63/16

(54) **Self-cleaning reverse osmosis device**
Selbstreinigende Umkehrosmosevorrichtung
Dispositif d'osmose inversée autonettoyante

(43) Date of publication of application: 29.09.2010
(73) Proprietor: King Abdulaziz City for Science and Technology, Riyadh 11442 (SA)
(72) Inventor: Baabbad, Mazen Abdullah, 11442, Riyadh (SA)
(74) Representative: Appelt, Christian W.

(56) References cited:
- EP-A1- 2 070 584
- WO-A1-92/21425
- WO-A1-97/19745
- US-A- 4 808 307
- US-A- 5 275 725
- US-A1- 2007 144 956
- US-B1- 6 386 751

## Description

The present invention relates to a self-cleaning reverse osmosis device and system and, in particular, to a device and system based on reverse osmosis membranes used to filter a liquid comprising solutes and particles, such as liquid mixtures, fresh water, waste water or sea water.

Reverse osmosis is known as a filtration process that uses pressure to force liquid comprising solutes to pass through a membrane. While the solutes remain on the outside of the membrane the purified liquid passes through the membrane to its other side. This process is widely used for purification of contaminated or unpurified water in medical, industrial and domestic applications, such as in desalination of sea water and in drinking water purification. Other application areas for reverse osmosis filtration are in the food industry, in particular for dewatering and concentration of liquids.

In a conventional processing a liquid to be processed is directed on a membrane under a high pressure. While a portion of the liquid passes through the membrane as filtered liquid solutes and particles in the liquid are retained at the outer surface of the membrane. A portion of these solutes and particles is drained off with the liquid that did not pass through the membrane as concentrated drain liquid and is finally rejected. However, a part of the solutes and particles permanently remains at the membrane and decreases its filtration efficiency.

The solutes and particles on the membrane are typically removed by complex manual procedures. Alternatively, the membrane can be replaced entirely to maintain the optimum filtration efficiency of the system. In each case the maintenance costs are relatively high.

Furthermore, such a system with a decreased filtration efficiency produces a growing amount of concentrated drain liquid that, is often rejected to the environment and can be critical with regard to environmental pollution.

WO 92/21425 A1 describes a rotary filtration device comprising a filter pack. The filtration device further comprises a plurality of rotating circular members, which have spiral grooves on their surface and which are attached to a shaft of the device in order to clean the adjacent filters.

US 5 275 725 A describes a rotary separation apparatus, which comprises flat membranes that are separated by partitions which are adapted to be rotated relatively to each other.

WO 97/19745 A1 describes an immersible rotary filtration device, which has filtration gaps into which fluids to be filtered are placed. Each fluid filtration gap is defined by a disc and a filter that rotate with respect to each other. The fluid is guided along the surface of the filter by spiral grooves which are formed in the surface of the disc. At the periphery of the disc, the retentate by-passes the subsequent gaps by holes in each subsequent filter in order to leave the device.

US 2007/0144956 A1 discloses a filtering apparatus including rotors for generating vortex water flow. The rotors consist of a first rotor having first blades and a second rotor having second blades, which extend in a radial direction from the center of the rotor and are disposed at positions different from each other and have widths different from each other. The first rotor and the second rotor are connected using rings at an outer area of the rotors.

US 6,386,751 B1 discloses a diffuser/emulsifier including a rotor and a stator, wherein infusion materials are drawn to openings in the rotor and stator to be diffused through the openings and into the host material.

It is an object of the present invention to provide a reverse osmosis device and system as well as a method for operating a reverse osmosis device with an increased filtration efficiency that reduces the amount of drain liquid and facilitates maintenance of the hardware.

The above object is achieved by a self-cleaning reverse osmosis device comprising the features according to claim 1, a system according to claim 9, and a method according to claim 14. Preferred embodiments are defined in the dependent claims.

The self-cleaning reverse osmosis device according to the present invention comprises a filtering means comprising a first surface including a membrane to filter a liquid to be processed, and a cleaning means comprising a surface disposed in parallel and adjacent to the membrane, wherein the filtering means and the cleaning means are arranged to rotate with respect to each other, to clean the membrane.

The liquid to be processed, such as waste water, sea water or unpurified drinking water, is guided under pressure past the cleaning means and towards the membrane of the filtering means, where a portion of the liquid passes through the membrane. The solutes and particles of the liquid that remain at the outside of the membrane are partially drained off with the remaining liquid that did not pass through the membrane. Any remaining solutes and particles at the membrane are swiped off the membrane by the cleaning means that is rotating with respect to the membrane.

The filtering means may comprise a carrier or a frame to hold the membrane and to sustain it against the pressure of the liquid. Preferably, the filtering means has the form of a rectangular, circular or oval disc. The membrane of the filtering means can be a membrane or a multilayered membrane typically used in reverse osmosis processing. It preferably has a structure that resists the pressure of the liquid exerted on it and that substantially keeps its form and shape.

The cleaning means can be provided in a variety of forms, comprising one or multiple components, such as panels, circular or oval discs, arranged according to an arbitrary or a regular patter, such as a star-shaped pattern. The cleaning means may rotate with respect to the membrane of the filtering means around its centre or an exocentric axis. Preferably, during rotation the entire outer surface of the membrane is reached by at least a part of the surface of the cleaning means and thus the entire outer surface of the membrane is cleaned from the retained solutes.

According to the present invention an advantageous reverse osmosis processing device is provided that uses a self-cleaning assembly to clean the membranes used to filter the liquid and, thus, provides a constant filtration efficiency of the membranes. This increases the yield of purified water and decreases the amount of drain water. Furthermore, service and maintenance can greatly reduced, since the membrane of the filtering means is self-cleaned during the operation of the device.

According to one embodiment of the self-cleaning reverse osmosis device the cleaning means includes a plurality of passages ending at its surface. In order to bring the liquid to be processed in contact with the membrane of the filtering means the liquid is guided through the passages of the cleaning means to the surface that adjoins the membrane of the filtering means. The passages can be tubes or channels within the cleaning means.

The outlets of the passages adjoining the membrane are arranged such that the liquid is equally dispersed at the membrane. The passages of the cleaning means are arranged in a radial pattern around the centre of the cleaning means or around the rotational axis. In addition, the passages are interconnected, such that one input of a passage leads to two or multiple outlets to disperse the liquid at the membrane. The outlets of the passages may further comprise means for injecting, dispersing or spraying of the liquid directly at the membrane. The passages may also be arranged such that the kinetic energy of the passing liquid is transformed to rotational energy supporting the rotation of the cleaning means with respect to the filtering means.

In another preferred embodiment of the device, the surface of the cleaning means comprises one or several of a sponge, a brush, and radial or helical ridges. The surface of the cleaning means is preferably arranged at a close distance to the membrane of the filtering means such that its surface texture, being defined by one or several layers of the sponge material, brushes, or ridges, sweeps off the solutes retained at the membrane and thus directly cleans the membrane mechanically. The surface of the cleaning means may as well be disposed with a small distance to the membrane so as to move and swirl the liquid therebetween such that the swirled liquid sweeps off the retained solutes from the membrane. According to another embodiment the surface of the cleaning means can also be smooth.

According to another embodiment of the invention the filtering means further includes a plurality of passages connecting its first surface and a second surface of the filtering means to guide liquid that does not pass through the membrane to the second surface of the filtering means. Preferably, the liquid to be processed is either forced through the membrane or follows the passages of the filtering means as drain liquid. The passages can be small tubes or channels connecting the first and the second surface of the filtering means. Preferably, the passages are arranged concentrically at the exterior of the filtering means, such as at the rim of the filtering means. The diameter and number of the passages is preferably adjusted such that only a desired amount of drain liquid bypasses the membrane of the filtering means and a pressure of the liquid on the membrane is maintained sufficiently high. Preferably, the filtering means has a sandwich-shaped form, wherein the second surface of the filtering means is disposed in parallel to the first surface.

In another embodiment of the present invention the filtering means further comprises a volume formed between the first and the second surface of the filtering means, to receive the liquid filtered through the membrane. The volume may be formed as a receptacle or a container in the interior of the filtering means. The volume may further comprise a plurality of outlets that provide the filtered liquid to the outside of the filtering means. Otherwise, the volume is sealed with respect to its surroundings such that the liquid can enter the volume only by passing through the membrane.

According to another embodiment of the present invention the filtering means further comprises a support means disposed between the first and the second surface, supporting the membrane. The support means may be a structure within the volume that supports the membrane to keep its form against the pressure of the liquid outside of the membrane. Preferably, the support means does not restrict the flow of the filtered liquid within the volume and has a similar shape as the corresponding filtering means, such as a perforated support disc.

In a preferred embodiment of the inventive device the second surface of the filtering means includes a second membrane, to filter liquid. Hence, drain liquid that is guided through the passages of the filtering means to the second surface may still pass through the second membrane into the filtering means and enter the volume between the first and the second surface.

In a particularly preferred embodiment of the present invention the membrane is a reverse osmosis semi-permeable membrane, preferably a thin film composite membrane, or a synthetic membrane comprising a polymer matrix having a dense barrier layer. The membrane can be any kind of a membrane suitable for reverse osmosis processing. Preferably, the membrane is resistant against the pressure of the liquid outside of the membrane, such that it substantially keeps its form and shape without breaking or splitting. Preferably, the membrane is selected to sufficiently filter the solutes or particles in the liquid, such as ionic salts, sediments, pollutants or even micro organisms. The membrane may be a thin film composite membrane comprising a film of at least one layers and at least one a support layer made from a material, such as polyimide, polysulfone or zeolite. The membrane may also comprise a polymer matrix with a dense barrier layer to block solutes to pass through the membrane. Preferably, the second membrane of the second surface of the filtering means has the same characteristics and materials as the membrane of the first surface. However, the material of both membranes may also be adjusted independently to the different concentrations of solutes in the liquid applied to the membrane on the first surface or to the second membrane.

According to another preferred embodiment of the device, the speed of rotation between the cleaning means and the filtering means is between 0.01 revolutions per second and 10 revolutions per second. Preferably, the speed of rotation is adjusted based on factors, such as the size and characteristics of the solutes and particles in the liquid to be processed, the type of the membranes used, the form and shape of the cleaning means and the mode of cleaning of the membranes by either swirling the liquid to sweep off the solutes from the membrane or by directly cleaning the membrane mechanically. Preferably, for seawater desalination and mechanical cleaning of the membranes through direct contact of the cleaning means with the membrane the preferable speed of rotation is 0.5, 1, or 2 revolution per second. A preferable speed of rotation for waste water purification is about 0.5, 1, or 2 revolutions per second.

In a particularly preferred embodiment of the inventive device the cleaning means and the filtering means have a shape of a circular disc. Preferably, the circular filtering means and the circular cleaning means rotate with respect to each other around their centres. The diameters of the filtering means disc and the cleaning means disc may be substantially the same.

The self-cleaning reverse osmosis system according to the present invention comprises at least one self-cleaning reverse osmosis device according to an embodiment of the invention, a housing accommodating the at least one device, and a shaft extending into the housing through centre holes in each filtering and cleaning means of the at least one device, towards an inner wall of the housing, wherein each filtering means is attached to the housing and each cleaning means is attached to the shaft, thereby being rotatable with the shaft with respect to the filtering means and the housing.

Preferably, the housing is sealed, such that a pressure can be applied pressurizing the liquid on the membrane of the device in order to produce and maintain a continuous purification and flow of the liquid to be processed. Preferably, the housing has a rotation-symmetric form, to allow the cleaning means of the at least one device to freely rotate within the housing. The interior of the filtering means may be sealed at its periphery by one of the walls of the housing. Preferably, the housing is made of a material, such as a metal, a metal alloy, or another material capable of resisting pressure within the system.

A particularly preferred embodiment of the inventive system comprises at least two devices, wherein the devices are arranged adjacent to another such that the filtering means of a device is opposed to the cleaning means of the adjacent device. Preferably, the devices are stacked with the same orientation on the shaft, wherein the cleaning means of the first device on the shaft is opposed to the inner wall of the housing towards which the shaft is extending and wherein the filtering means of the first device is adjacent to the cleaning means of the second device on the shaft.

Hence, in operation the cleaning means of the second device cleans one of the surfaces of the filtering means of the second device as well as one of the surfaces of the filtering means of the first device. In order to clean the filtering means of the adjacent first device the cleaning means can comprise a second cleaning surface disposed in parallel to the filtering means of the first device. Preferably, both surfaces of the cleaning means have the same or a similar surface texture.

Including two or more cleaning devices, a cascaded system is provided processing a liquid in multiple stages, wherein each stage is represented by one device. In the first stage, the liquid is either passed through the membrane or is guided past the filtering means to the next stage, i.e. to the cleaning means of the adjacent device, where it is processed substantially in the same way. However, the devices may also comprise different cleaning and filtering means, in particular different membranes, to allow for specific filtering with regard to a changing concentration of the solutes or size of particles in the liquid or event specific filtering of different solutes in each stage.

Moreover, the inventive system according to an embodiment of the present invention further comprises a cleaning means arranged adjacent to the outermost filtering means. This cleaning means can be attached to the shaft extending through its centre hole. Hence, in this embodiment the stack of filtering and cleaning means on the shaft is terminated on each side by a cleaning means in order to provide cleaning means for all filtering means. Preferably, all cleaning means are of the same type and comprise the same characteristics. However, also cleaning means of different type and comprising different characteristics can be provided.

A preferred embodiment of the inventive system further comprises a pump to pump said liquid to be processed to an outer cleaning means. Preferably, the liquid is pumped to the cleaning means of the first device stacked on the shaft in proximity of the inner wall, to which the shaft is extending. Preferably, the pressure within the system is substantially between 0.2 to 2.6 MPa for fresh and waste water processing and between 4 to 8 MPa for sea water desalination.

In another embodiment of the present invention the housing comprises a plurality of outlets in a side wall thereof. The outlets are connected to the filtering means to deliver the filtered liquid. The outlets may be connected to the interior of each filtering means to directly guide the filtered liquid to the exterior of the housing.

Preferably, the outlets are arranged in multiple rings perpendicular to the shaft axis in the side wall and adjacent to the filtering means. The drain liquid that did not pass through any of the membranes of the filtering means finally leaves the housing through a port in the housing that is preferably disposed in proximity to the last device or cleaning means with respect to the path of the liquid through the stacked devices. Preferably, the port in the housing comprises means to regulate the pressure within the system.

In another embodiment of the inventive system the shaft comprises a channel having an inlet at a first end to receive the liquid to be processed and a plurality of outlets at a second end to deliver said liquid to an outer cleaning means. Preferably, the plurality of outlets is arranged close to or at the inner wall of the housing to which the shaft is extending. Thus, the liquid to be processed is directly provided at the cleaning means of the first device stacked on the shaft. Preferably, each outlet of the shaft comprises means for injecting the liquid to the cleaning means such that the kinetic energy of the injected liquid directly supports the rotation of the shaft.

Preferably, the liquid to be processed is pumped into the shaft at a first side of the system and is guided through the shaft to the opposite side of the system. The liquid is thereafter processed in the reverse direction through the stacked devices and finally leaves the system as concentrated drain liquid on the first side of the system. Thus, the system can be easily attached to a processing pipeline or a purification system as an intermediate step by a simple adaptation of the tubing to deliver the liquid to the inlet of the shaft and to receive the drain liquid through the port of the housing.

In a particularly preferred embodiment of the system the cleaning means and the filtering means have the form of a circular disc with increasing diameters of the devices from one end of the shaft to the other end of the shaft. Preferably, the outer cleaning means of the device that receives the liquid to be processed first has the smallest diameter. Such a system and the housing has preferably a rotation-symmetric form.

A method for operating a self-cleaning reverse osmosis device according to the present invention comprises the steps of filtering and liquid to be processed through a membrane, and rotating a cleaning means, comprising a surface disposed in parallel and adjacent to the membrane to clean the membrane. Preferably, the liquid to be processed, such as drinking water, waste water or sea water is exposed to a membrane under pressure.

While the filtered liquid passes through the membrane, the solutes and solid particles in the liquid are retained at the membrane and are subsequently removed by the rotating surface of the cleaning means. Thus, the solutes and solid particles are removed from the system wherein the membrane is not blocked and maintains its functionality. Preferably, the membrane is a semipermeable membrane used in reverse osmosis processing and the surface of the cleaning means preferably comprises a plurality of cleaning units, such as layers of sponge material, brushes, and radial or helical ridges. Thus, by rotating of the cleaning means the solutes and solid particles can be mechanically removed from the membrane or are swept off by the remaining drain liquid that is swirled by the surface of the cleaning means.

Further details and characteristics of the invention are described below in an exemplifying embodiment of the invention in conjunction with the drawings in which:
- Fig. 1: shows an embodiment of a filtering means of a self-cleaning reverse osmosis device according to an embodiment of the present invention;
- Fig. 2: shows a cleaning means of a device according to the same embodiment of the present invention;
- Fig. 3: shows a side view of three stacked devices comprising an additional cleaning means at a shaft of a self-cleaning reverse osmosis system according to an embodiment of the present invention;
- Fig. 4: shows a perspective view of the system shown in Fig. 3;
- Fig. 5: shows the system of Fig. 4 without the additional cleaning means; and
- Fig. 6: shows an embodiment of the inventive system accommodated in a housing.

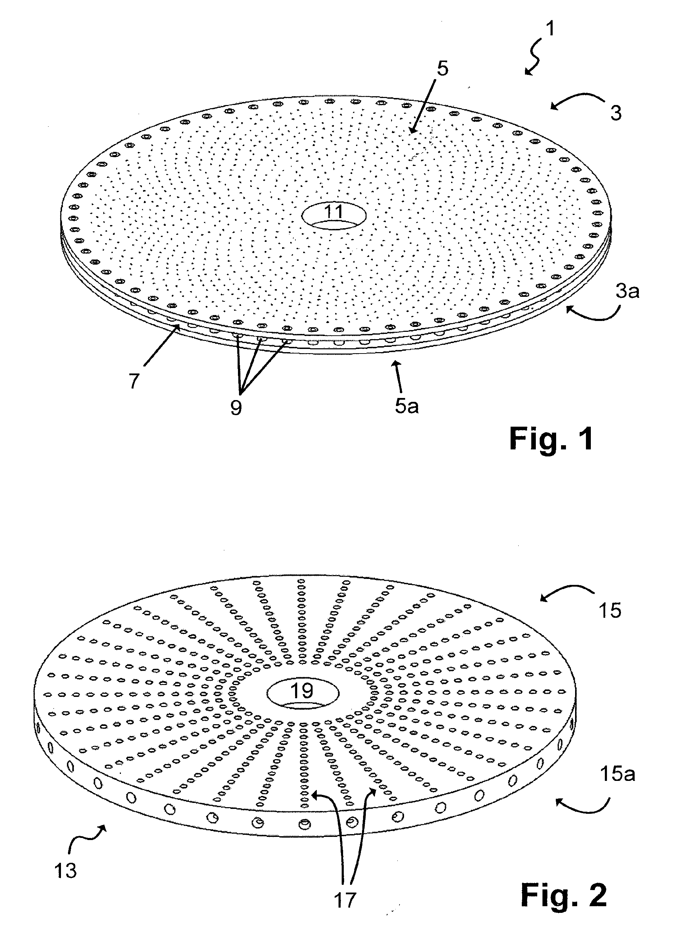

Figure 1 shows a filtering means 1 of an embodiment of a self-cleaning reverse osmosis device. The filtering means 1 has substantially the form of a circular disc with a first surface 3 and an opposing second surface 3a. Each surface 3, 3a comprises a membrane 5, 5a to filter a liquid. The membranes 5, 5a allow the liquid under pressure to enter a volume 7 between the first and the second surface 3, 3a. In addition, both sides 3, 3a of the filtering means 1 are connected by a plurality of tubes 9 arranged in a circle at the rim of the filtering means 1.

The tubes 9 guide liquid that did not pass through the membrane 5 into the volume 7 from the first side 3 to the second side 3a of the filtering means 1. The filtering means 1 may further have a centre hole 11. The volume 7 between the first and the second surface 3, 3a is sealed such that the only way for liquid to enter into the volume 7 is by passing one of the membranes 5, 5a. Furthermore, liquid can freely flow from one side 3 to the other side 3a through the tubes 9.

Preferably, the liquid to be processed is applied to one surface 3 of the filtering means 1 under pressure and either passes through the membrane 5 as filtered liquid or flows through the tubes 9 to the other surface 3a of the filtering means 1 as unfiltered drain liquid. Due to the filtering procedure solutes and particles in the drain liquid are retained at the membrane 5 of the filtering means 1. The filtered liquid in the volume 7 can exit the volume through the space between the surfaces 3, 3a at their peripheries. This space can be closed by a wall comprising a plurality of outlets.

Figure 2 shows a cleaning means 13 of a self-cleaning reverse osmosis device according to an embodiment of the present invention that is used to clean the membranes 5, 5a of the filtering means 1. The cleaning means 13 has the form of a circular disc having a surface 15 that is disposed in parallel and adjacent to a membrane 5, 5a on one side 3, 3a of the filtering means 1. The cleaning means 13 further comprises a parallel second surface 15a and a plurality of passages 17 connecting the surfaces 15, 15a with each other. Liquid that is applied to one surface 15a of the cleaning means 13 is guided through the cleaning means 13 and dispersed at the other surface 15 of the cleaning means 13 where it can be brought into contact with the adjacent membrane 5 of the filtering means 1. The passages 17 are arranged in concentric circles following a radial pattern around a centre hole 19 of the cleaning means 13. The passages 17 further have openings at the side wall of the disc to equally disperse and receive the liquid flowing around the cleaning means 13.

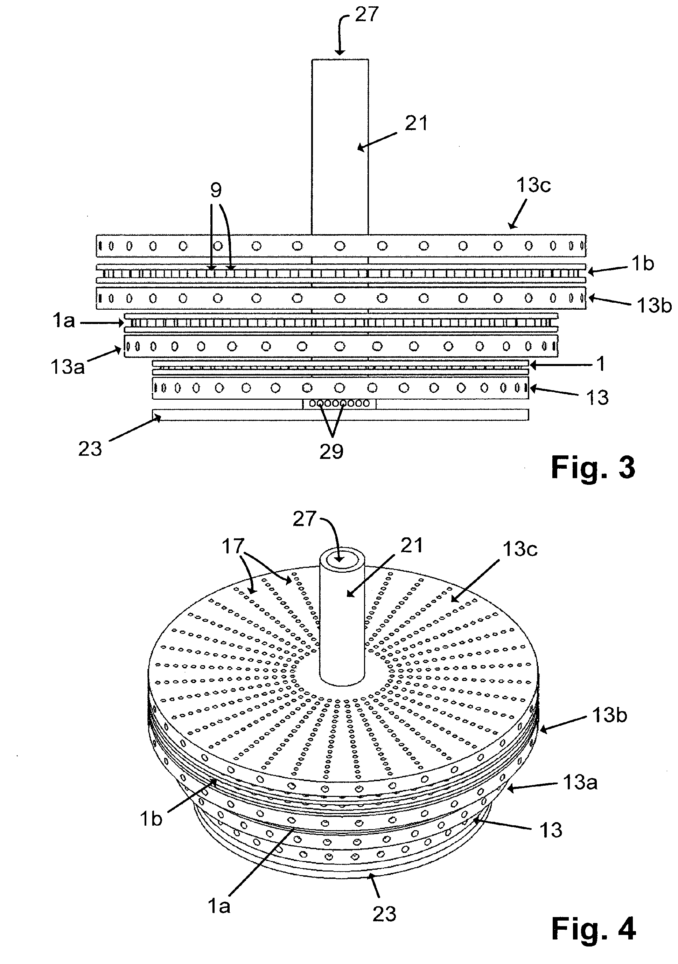

Several inventive devices may be stacked on a shaft 21 to form a self-cleaning reverse osmosis system as shown in Figure 3 and Figure 4. Each device shown comprises a filtering means 1, 1a, 1b and a cleaning means 13, 13a, 13b. The three devices are arranged in parallel and adjacent to each other such that the filtering means 1, 1a of a device is opposed to a cleaning means 13a, 13b of the adjacent device. The system further comprises an additional cleaning means 13c arranged in parallel and adjacent to the outer filtering means 1b.

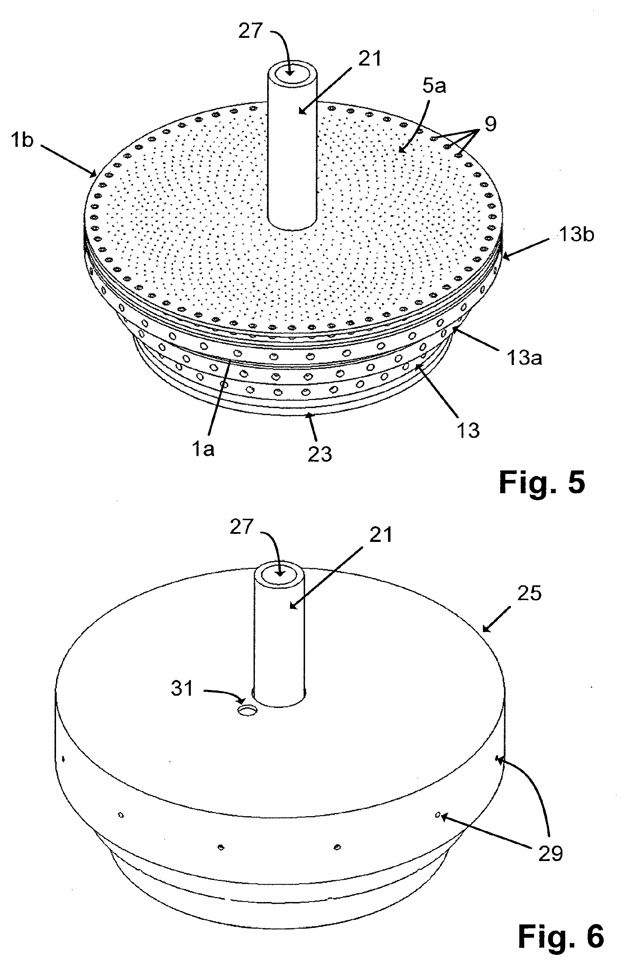

The shaft 21 extends through the filtering 1, 1a, 16 and cleaning 13, 13a, 13b, 13c means through their central holes and extends to a wall 23 of a housing 25 that accommodates the devices, as shown in Fig. 6. While the cleaning means 13, 13a, 13b, 13c are attached to the shaft 21 at their centre holes 19, the filtering means 1, 1a, 1b are attached to the housing 25 at their rims. At the centre holes 11 of the filtering means 1, 1a, 1b a wall connecting their surfaces is provided that seals the volume 7 in the interior of the filtering means 1 with respect to the exterior and the shaft 21. Furthermore, the centre holes 11 have a diameter that allows the shaft 21 to rotate freely around its longitudinal axis. The shaft 21 further includes an inlet 27 at the exterior end of the shaft 21 and a plurality of outlets 29 at the interior end of the shaft 21 in proximity to the inner wall 23 of the housing 25, wherein the inlet 27 and the plurality of outlets 29 of the shaft 21 are connected by the shaft 21.

To process a liquid in the system, either the shaft 21 or the housing 25 is rotated such that the filtering means 1, 1a, 1b and the cleaning means 13, 13a, 13b, 13c rotate with respect to each other. The liquid is pumped into the inlet 27 of the shaft 21 and guided through the channel and the outlets 29 to the cleaning means 13 of the first device. After passing the cleaning means 13 through the plurality of passages 17 the liquid is dispersed at the first surface 3 of the filtering means 1 and pressurized on the membrane 5. While a portion of the liquid is filtered through the membrane 5 and passes into the volume 7 as filtered liquid solutes and particles remain at the membrane 5 and subsequently flow with the remaining liquid that did not pass the membrane 5 through the tubes 9 to the other side 3a of the filtering means 1. Here, the remaining liquid is either filtered through the membrane 5a to pass into the volume 7 or is received by the cleaning means 13a of the adjacent device to be further processed in a similar way as in the first device.

By rotating the cleaning means 13, 13a, 13b, 13c with respect to the filtering means 1, 1a, 1b the remaining solutes on each membrane 5, 5a are swept off and flow with the drain liquid to the next processing stage. Finally, after leaving the last device at the filtering means 1b the drain liquid passes the additional cleaning means 13c and exits the system.

Figure 5 shows a perspective view of a system similar to the system shown in Fig. 4. In this embodiment, the additional cleaning means 13c is removed from the stack of devices. It is to be understood that the inventive system can also be used without the additional cleaning means 13c to process liquid.

Figure 6 shows a perspective view of the housing 25 of an embodiment of the self-cleaning reverse osmosis system accommodating the stacked devices at the shaft 21. The housing 25 further comprises a plurality of outlets 29 disposed in a side wall of the housing 25 that are directly connected to the corresponding filtering means 1, 1a, 1b. The outlets 29 provide the filtered liquid for further use. In addition, the housing 25 comprises a port 31 to receive the concentrated drain liquid. Thus, the liquid that is pumped into the system at inlet 27 of the shaft 21 leaves the system either as filtered liquid at outlets 29 or as drain liquid at port 31.

Many modifications may be provided to the device without leaving the scope of the invention. For example, it may be provided to fixedly mount the cleaning means with respect to the housing and to rotatably mount the filtering means.

It is to be understood that the invention may be practiced within the scope of the claims differently from the examples described.

## Claims

1. A self-cleaning reverse osmosis device, comprising:
a filtering means (1) comprising a first surface (3) including a membrane (5) to filter a liquid to be processed; and
a cleaning means (13) in the form of a circular disc comprising a surface (15) disposed in parallel and adjacent to the membrane (5), and a parallel second surface (15a), the cleaning means (13) including a plurality of passages (17) connecting the surface (15) with the second surface (15a) to guide the liquid that is applied to the second surface (15a) of the cleaning means (13) through the cleaning means (13) and disperse at the other surface (15) of the cleaning means (13) where it can be brought into contact with the adjacent membrane (5) of the filtering means (1), wherein the passages (17) of the cleaning means (13) are arranged in a radial pattern around the centre of the cleaning means (13), and interconnected, such that one input of a passage (17) leads to two or more outlets to disperse the liquid at the membrane (5), wherein the outlets of the passages (17) adjoining the membrane (5) are arranged such that the liquid is equally dispersed at the membrane (5), wherein the filtering means (1) and the cleaning means (13) are arranged to rotate with respect to each other, to clean the membrane (5), **characterized in that**
the passages (17) of the cleaning means (13) further have openings at a side wall of the disc to equally disperse and receive the liquid flowing around the cleaning means (13).

2. The device according to claim 1, wherein the surface (15) of the cleaning means (13) comprises one or several of a sponge, a brush, and radial or helical ridges.

3. The device according to claim 1 or 2, wherein the filtering means (1) further includes a plurality of passages (9) connecting its first surface (3) and a second surface (3 a) of the filtering means (1), to guide liquid that does not pass through the membrane (5) to the second surface (3a) of the filtering means (1)

4. The device according to claim 3, wherein the filtering means (1) further comprises a support means disposed in a volume (7) formed between the first (3) and the second (3a) surface of the filtering means (1), wherein the support means supports the membrane (5), and wherein the volume (7) is configured to receive the liquid filtered through the membrane (5).

5. The device according to claim 3 or 4, wherein the second surface (3a) of the filtering means (1) includes a second membrane (5a), to filter the liquid.

6. The device according to one of the preceding claims, wherein the membrane (5) is a reverse osmosis semipermeable membrane, preferably a thin film composite membrane, or a synthetic membrane comprising a polymer matrix having a dense barrier layer.

7. The device according to one of the preceding claims, wherein the speed of rotation between the cleaning means (13) and the filtering means (1) is between 0.01 revolutions per second and 10 revolutions per second, preferably 5 revolutions per second.

8. The device according to one of the preceding claims, wherein the filtering means (13) have the shape of a circular disc.

9. A self-cleaning reverse osmosis system, comprising
at least one self-cleaning reverse osmosis device according to one of the claims 1 to 8; a housing (25) accommodating the at least one device; and
a shaft (21) extending into the housing (25) through centre holes (11, 19) in each filtering (1, 1a, 1b) and cleaning (13, 13a, 13b) means of the at least one device, towards an inner wall (23) of the housing (25),
wherein each filtering means (1, 1a, 1b) is attached to the housing (25) and each cleaning means (13, 13a, 13b) is attached to the shaft (21), thereby being rotatable with the shaft (21) with respect to the filtering means (1, 1a, 1b) and the housing (25).

10. The system according to claim 9, comprising at least two devices, wherein the devices are arranged adjacent to each other, such that the filtering means (1, 1a) of a device is opposed to the cleaning means (13a, 13b) of the adjacent device.

11. The system according to claim 9 or 10, further comprising a cleaning means (13c) arranged adjacent to an outer filtering means (1b), wherein said cleaning means (13c) is attached to the shaft (21) extending through its centre hole (19).

12. The system according to one of the claims 9 to 11, further comprising a pump to pump said liquid to be processed to an inlet (27) at a first end of the shaft (21), wherein said shaft (21) further comprises a channel and a plurality of outlets (29) at a second end of the shaft (21), said channel connecting the inlet (27) and the plurality of outlets (29) such that the liquid is delivered to an outer cleaning means (13).

13. The system according to one of the claims 9 to 12, comprising at least two devices,
wherein the cleaning means (13, 13a, 13b) and the filtering means (1, 1a, 1b) have the form of a circular disc, wherein the diameters of the devices are increasing from one end of the shaft (21) to the other end of the shaft (21).

14. A method for operating a self-cleaning reverse osmosis device according to one of the claims 1 to 8, comprising the steps of:
filtering a liquid to be processed through a membrane; and
rotating a cleaning means comprising a surface disposed in parallel and adjacent to the membrane to clean the membrane.

## Patentansprüche

1. Selbstreinigende Umkehrosmosevorrichtung, die Folgendes umfasst:
ein Filtermittel (1), das eine erste Oberfläche (3) umfasst, die eine Membran (5) aufweist, um eine zu verarbeitende Flüssigkeit zu filtern; und
ein Reinigungsmittel (13) in Form einer kreisförmigen Scheibe, das eine Oberfläche (15), die parallel und benachbart zu der Membran (5) eingerichtet ist, und eine parallele zweite Oberfläche (15a) umfasst, wobei das Reinigungsmittel (13) eine Vielzahl von Durchgängen (17) aufweist, die die Oberfläche (15) mit der zweiten Oberfläche (15a) verbinden, um die Flüssigkeit, die auf die zweite Oberfläche (15a) des Reinigungsmittels (13) angewandt wird, durch das Reinigungsmittel (13) zu leiten und an der anderen Oberfläche (15) des Reinigungsmittels (13) zu verteilen, wo sie in Kontakt mit der benachbarten Membran (5) des Filtermittels (1) gebracht werden kann, wobei die Durchgänge (17) des Reinigungsmittels (13) gemäß einem radialen Muster um das Zentrum des Reinigungsmittels (13) angeordnet und miteinander verbunden sind, so dass ein Eingang eines Durchgangs (17) zu zwei oder mehr Auslässen führt, um die Flüssigkeit an der Membran (5) zu verteilen, wobei die an die Membran (5) angrenzenden Auslässe der Durchgänge (17) derart angeordnet sind, dass die Flüssigkeit gleichmäßig auf der Membran (5) verteilt ist, wobei das Filtermittel (1) und das Reinigungsmittel (13) angeordnet sind, um relativ zueinander zu rotieren, um die Membran (5) zu reinigen,
**dadurch gekennzeichnet, dass**
die Durchgänge (17) des Reinigungsmittels (13) ferner Öffnungen an einer Seitenwand der Scheibe aufweisen, um die Flüssigkeit, die um das Reinigungsmittel (13) fließt, gleichmäßig zu verteilen und zu empfangen.

2. Vorrichtung nach Anspruch 1, wobei die Oberfläche (15) des Reinigungsmittels (13) eines oder mehrere aus einem Schwamm, einer Bürste, und radiale oder spiralförmige Erhöhungen umfasst.

3. Vorrichtung nach Anspruch 1 oder 2, wobei das Filtermittel (1) ferner eine Vielzahl von Durchgängen (9) aufweist, die seine erste Oberfläche (3) und eine zweite Oberfläche (3a) des Filtermittels (1) verbinden, um Flüssigkeit, die nicht durch die Membran (5) kommt, zu der zweiten Oberfläche (3a) des Filtermittels (1) zu leiten.

4. Vorrichtung nach Anspruch 3, wobei das Filtermittel (1) ferner ein Stützmittel umfasst, das in einem Volumen (7) eingerichtet ist, das zwischen der ersten (3) und der zweiten (3a) Oberfläche des Filtermittels (1) gebildet ist, wobei das Stützmittel die Membran (5) stützt, und wobei das Volumen (7) eingestellt ist, die durch die Membran (5) gefilterte Flüssigkeit zu empfangen.

5. Vorrichtung nach Anspruch 3 oder 4, wobei die zweite Oberfläche (3a) des Filtermittels (1) eine zweite Membran (5a) aufweist, um die Flüssigkeit zu filtern.

6. Vorrichtung nach einem der vorhergehenden Ansprüche, wobei die Membran (5) eine semipermeable Umkehrosmosemembran, vorzugsweise eine Dünnschichtverbundmembran, oder eine synthetische Membran ist, die eine Polymermatrix mit einer dichten Sperrschicht umfasst.

7. Vorrichtung nach einem der vorhergehenden Ansprüche, wobei die Rotationsgeschwindigkeit zwischen dem Reinigungsmittel (13) und dem Filtermittel (1) zwischen 0,01 Umdrehungen pro Sekunde und 10 Umdrehungen pro Sekunde, vorzugsweise 5 Umdrehungen pro Sekunde, beträgt.

8. Vorrichtung nach einem der vorhergehenden Ansprüche, wobei das Filtermittel (13) die Form einer kreisförmigen Scheibe aufweist.

9. Selbstreinigendes Umkehrosmosesystem, das Folgendes umfasst:
mindestens eine selbstreinigende Umkehrosmosevorrichtung nach einem der Ansprüche 1 bis 8;
ein Gehäuse (25), das die mindestens eine Vorrichtung aufnimmt; und
einen Schaft (21), der sich in das Gehäuse (25) durch Mittellöcher (11, 19) in jedem Filter- (1, 1a, 1b) und Reinigungsmittel (13, 13a, 13b) der mindestens einen Vorrichtung, hin zu einer inneren Wand (23) des Gehäuses (25) erstreckt,
wobei jedes Filtermittel (1, 1a, 1b) an dem Gehäuse (25) angebracht ist und jedes Reinigungsmittel (13, 13a, 13b) an dem Schaft (21) angebracht ist, wodurch es mit dem Schaft (21) in Bezug auf die Filtermittel (1, 1a, 1b) und das Gehäuse (25) rotierbar ist.

10. System nach Anspruch 9, das mindestens zwei Vorrichtungen umfasst, wobei die Vorrichtungen zueinander benachbart angeordnet sind, so dass das Filtermittel (1, 1a) einer Vorrichtung dem Reinigungsmittel (13a, 13b) der benachbarten Vorrichtung gegenüberliegt.

11. System nach Anspruch 9 oder 10, das ferner ein Reinigungsmittel (13c) umfasst, das benachbart zu einem äußeren Filtermittel (1b) angeordnet ist, wobei das Reinigungsmittel (13c) an dem Schaft (21), der sich durch sein Mittelloch (19) erstreckt, angebracht ist.

12. System nach einem der Ansprüche 9 bis 11, das ferner eine Pumpe umfasst, um die zu verarbeitende Flüssigkeit zu einem Einlass (27) an einem ersten Ende des Schafts (21) zu pumpen, wobei der Schaft (21) ferner einen Kanal und eine Vielzahl von Auslässen (29) an einem zweiten Ende des Schafts (21) umfasst, wobei der Kanal den Einlass (27) und die Vielzahl der Auslässe (29) verbindet, so dass die Flüssigkeit einem äußeren Reinigungsmittel (13) zugeführt wird.

13. System nach einem der Ansprüche 9 bis 12, das mindestens zwei Vorrichtungen umfasst, wobei die Reinigungsmittel (13, 13a, 13b) und die Filtermittel (1, 1a, 1b) die Form einer kreisförmigen Scheibe aufweisen, wobei die Durchmesser der Vorrichtungen von einem Ende des Schafts (21) zu dem anderen Ende des Schafts (21) zunehmen.

14. Verfahren zum Betrieb einer selbstreinigenden Umkehrosmosevorrichtung nach einem der Ansprüche 1 bis 8, das die folgenden Schritte umfasst:
Filtern einer zu verarbeitenden Flüssigkeit durch eine Membran; und
Rotieren eines Reinigungsmittels, das eine Oberfläche umfasst, die parallel und benachbart zu der Membran eingerichtet ist, um die Membran zu reinigen.

## Revendications

1. Dispositif d'osmose inverse autonettoyant, qui comprend :
un moyen de filtrage (1) qui comprend une première surface (3) qui comprend une membrane (5) destinée à filtrer un liquide à traiter ; et
un moyen de nettoyage (13) sous la forme d'un disque circulaire qui comprend une surface (15) disposée de manière parallèle et adjacente à la membrane (5), et une seconde surface parallèle (15a), le moyen de nettoyage (13) comprenant une pluralité de passages (17) qui relient la surface (15) à la seconde surface (15a) afin de guider le liquide qui est appliqué sur la seconde surface (15a) du moyen de nettoyage (13) dans le moyen de nettoyage (13), et de le disperser au niveau de l'autre surface (15) du moyen de nettoyage (13), où il peut être amené en contact avec la membrane adjacente (5) du moyen de filtrage (1), les passages (17) du moyen de nettoyage (13) étant disposés de manière radiale autour du centre du moyen de nettoyage (13), et reliés, de sorte qu'une entrée d'un passage (17) mène à deux évacuations ou plus afin de disperser le liquide au niveau de la membrane (5), les évacuations des passages (17) qui joignent la membrane (5) étant disposées de sorte que le liquide soit dispersé de manière égale au niveau de la membrane (5), le moyen de filtrage (1) et le moyen de nettoyage (13) étant disposés de façon à tourner l'un par rapport à l'autre, afin de nettoyer la membrane (5),
**caractérisé en ce que**
les passages (17) du moyen de nettoyage (13) possèdent en outre des ouvertures au niveau d'une paroi latérale du disque, afin de disperser et de recevoir de manière égale le liquide qui circule autour du moyen de nettoyage (13).

2. Dispositif selon la revendication 1, dans lequel la surface (15) du moyen de nettoyage (13) comprend un ou plusieurs d'une éponge, d'une brosse, et de nervures radiales ou hélicoïdales.

3. Dispositif selon la revendication 1 ou 2, dans lequel le moyen de filtrage (1) comprend en outre une pluralité de passages (9) qui relient sa première surface (3) à une seconde surface (3a) du moyen de filtrage (1), afin de guider le liquide qui ne passe pas par la membrane (5) vers la seconde surface (3a) du moyen de filtrage (1).

4. Dispositif selon la revendication 3, dans lequel le moyen de filtrage (1) comprend en outre un moyen de support disposé dans un volume (7) formé entre la première (3) et la seconde (3a) surfaces du moyen de filtrage (1), le moyen de support supportant la membrane (5), et le volume (7) étant configuré pour recevoir le liquide filtré par la membrane (5).

5. Dispositif selon la revendication 3 ou 4, dans lequel la seconde surface (3a) du moyen de filtrage (1) comprend une seconde membrane (5a), destinée à filtrer le liquide.

6. Dispositif selon l'une des revendications précédentes, dans lequel la membrane (5) est une membrane d'osmose inverse semi-perméable, de préférence une membrane composite à film mince, ou une membrane synthétique qui comprend une matrice de polymère qui possède une couche barrière dense.

7. Dispositif selon l'une des revendications précédentes, dans lequel la vitesse de rotation entre le moyen de nettoyage (13) et le moyen de filtrage (1) est comprise entre 0,01 tours par seconde et 10 tours par seconde, et est de préférence de 5 tours par seconde.

8. Dispositif selon l'une des revendications précédentes, dans lequel le moyen de filtrage (13) possède la forme d'un disque circulaire.

9. Système d'osmose inverse autonettoyant, qui comprend
au moins un dispositif d'osmose inverse autonettoyant selon l'une des revendications 1 à 8 ;
une enceinte (25) qui contient ledit dispositif ; et
un axe (21) qui s'étend dans l'enceinte (25), par des orifices centraux (11, 19) situés dans chaque moyen de filtrage (1, 1a, 1b) et de nettoyage (13, 13a, 13b) dudit dispositif, vers une paroi intérieure (23) de l'enceinte (25),
dans lequel chaque moyen de filtrage (1, 1a, 1b) est relié à l'enceinte (25), et chaque moyen de nettoyage (13, 13a, 13b) est relié à l'axe (21), afin de pouvoir tourner avec l'axe (21) par rapport au moyen de filtrage (1, 1a, 1b) et à l'enceinte (25).

10. Système selon la revendication 9, qui comprend au moins deux dispositifs, dans lequel lesdits dispositifs sont disposés de manière adjacente l'un à l'autre, de sorte que le moyen de filtrage (1, 1a) d'un dispositif soit opposé au moyen de nettoyage (13a, 13b) du dispositif adjacent.

11. Système selon la revendication 9 ou 10, qui comprend en outre un moyen de nettoyage (13c) disposé de manière adjacente à un moyen de filtrage externe (1b), ledit moyen de nettoyage (13c) étant relié à l'axe (21) qui s'étend dans son orifice central (19).

12. Système selon l'une des revendications 9 à 11, qui comprend en outre une pompe destinée à pomper ledit liquide à traiter vers une admission (27) à une première extrémité de l'axe (21), ledit axe (21) comprenant en outre un canal et une pluralité d'évacuations (29) à une seconde extrémité de l'axe (21), ledit canal reliant l'admission (27) et la pluralité d'évacuations (29) de sorte que le liquide soit fourni à un moyen de nettoyage externe (13).

13. Système selon l'une des revendications 9 à 12, qui comprend au moins deux dispositifs, dans lequel le moyen de nettoyage (13, 13a, 13b) et le moyen de filtrage (1, 1a, 1b) possèdent la forme d'un disque circulaire, les diamètres des dispositifs augmentant d'une extrémité de l'axe (21) vers l'autre extrémité de l'axe (21).

14. Procédé de fonctionnement d'un dispositif d'osmose inverse autonettoyant selon l'une des revendications 1 à 8, qui comprend les étapes qui consistent à :
filtrer un liquide à traiter à travers une membrane ; et
faire tourner un moyen de nettoyage qui comprend une surface disposée de manière parallèle et adjacente à la membrane, afin de nettoyer la membrane.
